# EUROPÄISCHE PATENTSCHRIFT

(11) **EP 1 436 112 B1**
(45) Veröffentlichungstag und Bekanntmachung des Hinweises auf die Patenterteilung: **24.11.2004**
(21) Anmeldenummer: 02801861.2
(22) Anmeldetag: 29.08.2002
(51) Int. Cl.: B23D 45/12

(54) **VERFAHREN ZUM TRENNEN VON WERKSTÜCKEN**
METHOD FOR SEPARATING WORK PIECES
PROCEDE DE SECTIONNEMENT DE PIECES A USINER

(30) Priorität: 19.10.2001 DE 10151169
(43) Veröffentlichungstag der Anmeldung: 14.07.2004
(73) Patentinhaber: Weidner, Gerd-Jürgen, 72514 Inzighofen-Vilsingen (DE)
(72) Erfinder: Weidner, Gerd-Jürgen, 72514 Inzighofen-Vilsingen (DE)
(74) Vertreter: Weiss, Peter, Dr.
(86) Internationale Anmeldenummer: PCT/EP2002/009635
(87) Internationale Veröffentlichungsnummer: WO 2003/035315

(56) Entgegenhaltungen:
- EP-A- 0 513 524
- CH-A- 312 313
- DE-A- 1 477 911
- DE-A- 1 502 693
- DE-A- 2 949 921
- DE-A- 4 439 047
- DE-B- 1 228 908
- FR-A- 1 414 882
- FR-A- 2 564 347
- US-A- 2 927 404
- US-A- 4 412 401
- US-A- 4 901 611
- PATENT ABSTRACTS OF JAPAN vol. 2000, no. 02, 29. Februar 2000 (2000-02-29) -& JP 11 300520 A (HIGUCHI DENSETSU KK), 2. November 1999 (1999-11-02)

## Beschreibung

Die vorliegende Erfindung betrifft ein Verfahren zum Trennen von Werkstücken, insbesondere geschmiedeten Büchsen, mit zumindest einer Antriebseinrichtung und einer Spanneinrichtung, in welcher das Werkstück gehalten wird, wobei mit zumindest einer Sägeeinrichtung das Werkstück durchtrennt und zum Durchtrennen das Werkstück rotativ gegenüber der Sägeeinrichtung angetrieben wird sowie eine vorrichtung zur Durchführung des Verfahrens.

Derartige Verfahren und Vorrichtungen sind bereits in vielfältiger Form und Ausgestaltung im Markt bekannt. Es sind Kreissägen und Bandsägen bekannt, mit welchen Werkstücke durchtrennt werden können. Dabei wird ein Werkstück auf dem Maschinengestell so eingespannt, dass es während der Bearbeitung unbeweglich bleibt. Bei einer Kreissäge wird das Werkstück mit einem rotierenden Sägeblatt durchtrennt. Bei einer Bandsäge wird das Werkstück mittels eines sich bewegenden endlosen Sägebandes durchtrennt. In beiden Fällen bewegt sich das Werkzeug, nicht jedoch das Werkstück.

Nachteilig ist, dass es zu einer Änderung des Schnittverlaufes kommen kann, wenn das Werkstück aus einem harten Werkstoff besteht und sich nicht einfach durchtrennen lässt. Eine Parallelität beim dem durchtrennten Werkstück ist nicht ohne weitere Nachbearbeitung erzielbar.

Um ein Werkstück mittels eines rotativen angetriebenen Sägeblattes vollständig zu durchtrennen, muss dessen Durchmesser entweder gleich dem Durchmesser des zu durchtrennenden Werkstückes sein, oder aber um ein Vielfaches grösser sein als der des Werkstückes, damit eine gute Schnittleistung erzielt werden kann.

Da die Sägen meist mit hoher Geschwindigkeit arbeiten, kann es bei derartigen Verfahren und Vorrichtungen zu einer Hitzeentwicklung an dem Werkstück kommen, denn sowohl das Sägeblatt als auch das endlose Sägeband bewegen sich beim Durchtrennen des Werkstückes nur in einem kleinen Bereich des Umfangs des Werkstückes.

Auch die Oberflächenrauhigkeit ist bei den oben genannten Verfahren und Vorrichtungen nicht optimal, denn die Sägen laufen nicht gleichmässig durch das Werkstück. So ist eine Nachbearbeitung des Werkstückes unerlässlich, um eine gute Qualität zu erzielen, was unerwünscht ist.

Je grösser das Werkstück, desto länger dauert das Durchtrennen des Werkstückes, wodurch sich auf der anderen Seite die Kosten hinsichtlich Verschleiss der Werkzeuge, Energie etc. erhöhen. Dies ist zeit-, kosten- und energieaufwändig, was unerwünscht ist.

Aufgabe der vorliegenden Erfindung ist es, die oben genannten Nachteile zu beseitigen und ein Verfahren sowie eine Vorrichtung zu schaffen, welche es ermöglichen, Werkstücke zu durchtrennen, ohne dass eine Nachbearbeitung des Werkstückes hinsichtlich Oberflächenrauhigkeit und Parallelität notwendig ist. Ein verschleissarmes Durchlaufen des Sägeblattes durch das Werkstück ist ebenfalls erwünscht. Weiterhin soll eine Hitzeentwicklung an dem Werkstück sowie an dem Werkzeug minimiert werden. Ferner soll die Bearbeitungszeit erheblich verkürzt werden.

Die DE 29 49 921 offenbart eine Vorrichtung zum mechanischen Umfangsbearbeiten von ring- oder büchsenförmigen Werkstücken, bei welcher das zu bearbeitende Werkstück gegenüber einem Werkzeug bzw. einem Schnittwerkzeug bewegt wird.

Die US 4,412,401 offenbart eine Vorrichtung zum Durchtrennen von Rohren grösseren Durchmessers, wobei ein Rohr auf entsprechende Rollenelemente aufliegt, und über eine Kappsäge durch Verdrehen des Rohres ablängbar ist.

Eine ähnliche Maschine zum Durchtrennen von Rohren offenbart die US 4,901,611, wobei ein zu bearbeitendes Werkstück auf zwei Walzenelementen aufliegt und mittels einer quer bewegbaren Säge durchtrennbar ist.

Die DE 1 502 693 beschreibt eine Vorrichtung zum Spannen und gleichzeitigem Drehen von Werkstücken auf zwei Walzenelementen, wobei das Werkstück mittels eines Riemenelementes zum Antreiben bzw. zum rotativen Antreiben umfangen wird. Eine entsprechende relativ verschwenkbare Kappsäge durchtrennt das Werkstück.

Zur Lösung dieser Aufgabe führen die Merkmale der Ansprüche 1 und 4.

Das Sägeblatt bewegt sich gegenüber dem Werkstück gegenläufig, wobei eine Hitzeentwicklung reduziert wird.

Eine Nachbearbeitung des Werkstückes ist nicht mehr notwendig, denn sowohl das Sägeblatt als auch das Werkstück bewegen sich auf einer vorgeschriebenen Bahn. Hierdurch ergibt sich keine Änderung im Schnittverlauf, d.h. der Parallelität. Die Oberflächenrauhigkeit ist nur noch minimal und das Sägeblatt läuft gleichmässig durch das Werkstück.

Von Vorteil ist auch, den Durchmesser des Sägeblattes gegenüber dem Durchmesser des zu durchtrennenden

Werkstückes erheblich zu verringern, wodurch Kosten und Energie eingespart werden. Zudem lässt sich die Bearbeitungszeit zum Durchsägen des Werkstückes wesentlich reduzieren.
Da das Durchsägen bei der vorliegenden Erfindung ohne Kühlmittel oder Zusätze erfolgt, ist es von Vorteil, dass anfallende Späne gesammelt und wieder eingeschmolzen werden können, ohne dass diese einer separaten Reinigung zugeführt werden müssen.

Auch ist bei Anwendung dieses Verfahrens ein Verschleiss von Sägeblättern bei weitem geringer als bei bisher bekannten Verfahren, da das Sägeblatt nur in den äusseren, rotierenden Mantelbereich des Werkstückes eingreift.

Die Vorrichtung weist eine mit der Spanneinrichtung verbundenen Antriebseinrichtung auf, mit welcher das zu bearbeitende Werkstück gehalten wird. Zusätzlich liegt das Werkstück auf den Rollen der Aufnahmeeinrichtung auf. Das Werkstück wird während der Bearbeitung auf den Rollen abgestützt und federnd und/oder dämpfend gehalten.

Die Rollen der Aufnahmeeinrichtung liegen auf Elementen auf, die eine gefederte und/oder gedämpfte Lagerung ermöglichen. Die Rollen selbst können frei beweglich sein oder aktiv angetrieben werden und einen eigenen Antrieb beispielsweise in Form eines Servo- oder Elektromotors aufweisen.

Als Führungseinrichtung für die Bewegung der Aufnahmeeinrichtung in die Z-Richtung kann eine Linearführung verwendet werden, jedoch ist jede andere nach dem Stand der Technik bekannte Führungseinrichtung möglich.

Gleiches gilt für die Zustelleinrichtung in Form der Spindel, welche den Vorschub des Sägeblattes in Richtung des Werkstückes gewährleistet. Statt einer Spindel kann ebenso eine hydraulische Vorrichtung, eine Schiene oder ein Linearantrieb vorgesehen sein. Auch hier soll der Erfindung keine Grenzen gesetzt sein.

Desweiteren ist es bei der Vorrichtung möglich, eine Auffangvorrichtung vorzusehen, welche das durchtrennte Werkstück auffängt und somit verhindert, dass das Sägeblatt eingeklemmt und beschädigt wird.

Im Rahmen der vorliegenden Erfindung soll auch liegen, dass auf den einzelnen Rollen bzw. Rollenelementen sehr lange geschmiedete, vorzugsweise mehrfach geschmiedete Büchsen aufgenommen werden, um einzelne Ringe von diesen Büchsen abzusägen. Dabei soll auch im Rahmen der vorliegenden Erfindung liegen, dass eine Mehrzahl von Sägeblättern hintereinander bzw. nebeneinander angeordnet werden kann, um gleichzeitig mehrere Ringe von der Büchse in oben beschriebener Weise zu sägen.

Ferner hat sich als vorteilhaft bei der vorliegenden Erfindung erwiesen, mit derartigen Vorrichtungen nicht nur Ringe von Walzen oder geschmiedeten Büchsen abzusägen, es können auch gedrehte oder gezogene Rundmaterialien, Rohre, Wellen etc. in oben beschriebener Weise bearbeitet werden und entsprechende Ringe oder Scheiben abgesägt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Vorderansicht der Vorrichtung zum Trennen von Werkstücken gemäss der vorliegenden Erfindung;
Figur 2 eine Seitenansicht der Vorrichtung gemäss Figur 1.

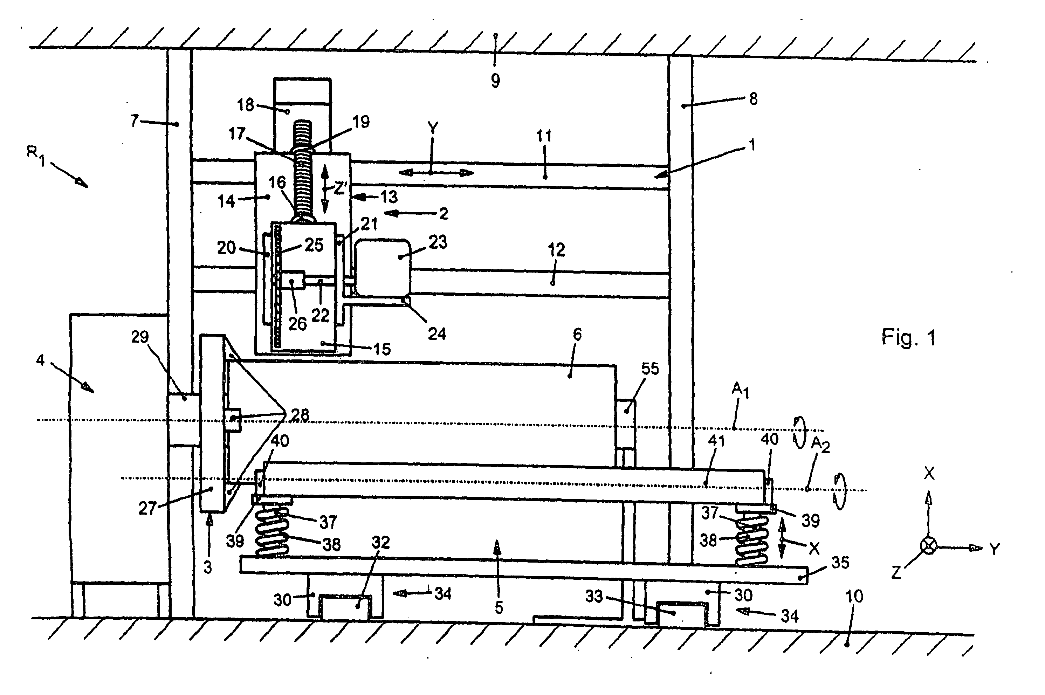

Gemäss Figur 1 weist eine Vorrichtung R₁ einen Maschinenrahmen 1 auf, an welchem eine Sägeeinrichtung 2 bewegbar angeordnet ist, sowie eine Spanneinrichtung 3 mit einer Antriebseinrichtung 4, eine Aufnahmeeinrichtung 5 für ein Werkstück 6. Das Werkstück 6 ist hier eine einfach oder mehrfach geschmiedete Kupferbüchse.

Der Maschinenrahmen 1 besteht aus zwei Seitenträgern 7, 8, welche mit ihren jeweiligen Enden in eine Decke 9 und einen Untergrund 10 angrenzen. Zwischen den beiden Seitenträger 7, 8 sind zumindest zwei Traversen 11, 12 angeordnet.

An diesen Traversen 11 und 12 ist ein Kreuzschlitten 13 der Sägeeinrichtung 2 angeordnet, welcher eine Grundplatte 14 und eine daran schwenkbar befestigte Platte 15 aufweist. Der Kreuzschlitten 13 ist gegenüber der Traverse 11, 12 in einer Y-Richtung verfahrbar und auch in einer gewünschten Position festlegbar gelagert.

Die Platte 15 weist an ihrer Oberseite eine Führung 16 auf, in welche das eine Ende einer Zustelleinrichtung 17, insbesondere Spindel, mündet. Das andere Ende der Spindel 17 ist mit einem Antriebselement 18 verbunden. Die Spindel 17 ist in einer weiteren Führung 19 geführt, welche der Oberseite der Grundplatte 14 zugeordnet ist.

An der Platte 15 sind zwei Querstreben 20, 21 zueinander beabstandet angeordnet, wobei eine Welle 22 vorgesehen ist, welche mit ihrem einen Ende in der Querstrebe 20 gelagert ist und durch die Querstrebe 21 geführt ist. Mit ihrem anderen Ende steht sie mit einem Antriebselement 23 in Verbindung. Dieses Antriebselement 23 sitzt auf einer von der Querstrebe 21 abragenden Platte 24.

Auf der Welle 22 ist ferner zumindest ein Sägeblatt 25 mittels eines Verbindungsstückes 26 verschiebbar angeordnet.

Die Spanneinrichtung 3 weist einen Rahmen 27 auf. An diesem sind auf der einen Seite Spannbacken 28 befestigt, die zwischen sich das Werkstück 6 fest einspannen. Auf der anderen Seite ist der Rahmen 27 mit einer Antriebswelle 29 verbunden, welche den Rahmen 27 und damit die Spanneinrichtung 3 mit der Antriebseinrichtung 4 verbindet.

Die Aufnahmeeinrichtung 5, auf welcher das Werkstück 6 während der Bearbeitung aufliegt, ist mittels Schlittenelementen 30, 31 auf Führungsschienen 32, 33 geführt. Die Schlittenelemente 30, 31 sowie die Führungsschienen 32, 33 bilden zusammen die Führungseinrichtung 34. Die Schlittenelemente 30, 31 lassen sich gegenüber den Führungsschienen 32, 33 in einer gewünschten Position wiederlösbar festlegen.

Auf den Schlittenelementen 30, 31 sind zwei Querstreben 35, 36 angeordnet, in denen endseits jeweils ein Element 37 teleskopartig gelagert ist. Um das Element 37 herum sind Federn 38 angeordnet, welche eine zusätzliche Federung bewirken.

Auf jedem Element 37 ist eine Platte 39 angeordnet, auf welcher wiederum ein Element 40 zur Aufnahme und Lagerung von Rollen 41, 42 befestigt ist.

Die Elemente 37 mit den Federn 38 lassen eine Bewegung der Rollen 41, 42 in dargestellter X-Richtung zu. Ferner sind die Rollen 41, 42 über die Schlittenelemente 30, 31 entlang den Führungsschienen 32, 33 in einer Z-Richtung verfahrbar.

Der Aufnahmevorrichtung 5 ebenfalls zugeordnet ist eine Auffangvorrichtung 55, welche der Aufnahme eines durchgesägten Werkstückes dient. Die Auffangvorrichtung 55 wird mittels Feststellelementen 56 im Inneren des Werkstückes 6 befestigt.

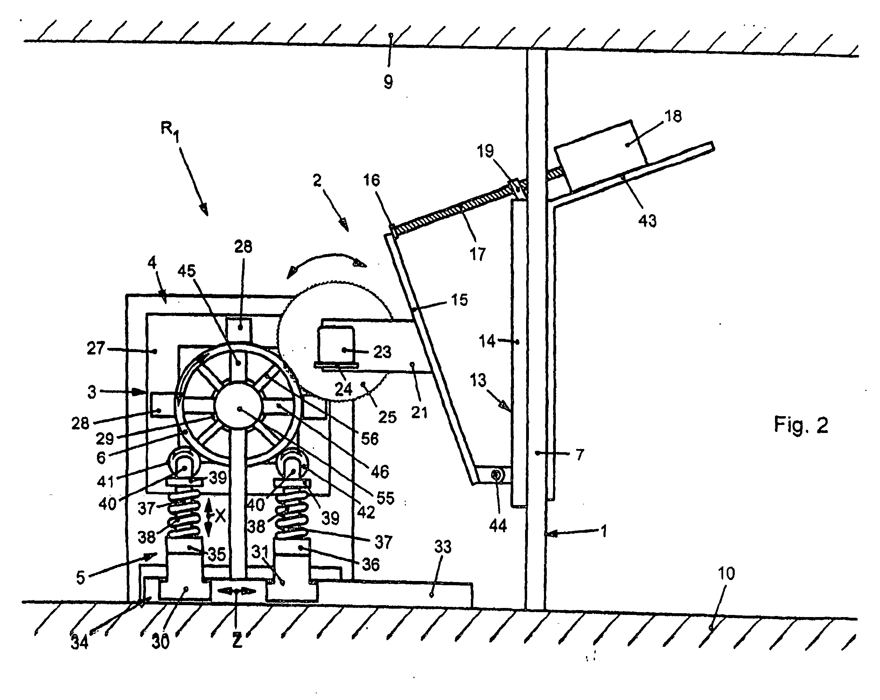

In Figur 2 ist eine Auflageplatte 43 für das Antriebselement 18 der Spindel 17 vorgesehen, welche an der Grundplatte 14 des Kreuzschlittens 13 der Sägeeinrichtung 2 anliegt. An dem Kreuzschlitten 13 ist ferner ein Gelenk 44 angeordnet, welches die Platte 15 mit der Grundplatte 14 verschwenkbar verbindet.

Die Spanneinrichtung 3 weist Querverstrebungen 45, 46 auf, welche auf dem Rahmen 27 angeordnet sind.

In Figur 3 ist ein weiteres Ausführungsbeispiel der vorliegenden Erfindung dargestellt. Dort wird das Werkstück 6 in senkrechter oder auch waagerechter Position durch die Spannbacken 28 der Spanneinrichtung 3 sowie gegebenenfalls durch weitere Spannbacken 47 eingespannt.

Dieses Spannbacken 47 sind an einem Rahmen 48 einer weiteren Spanneinrichtung 49 befestigt, welche mittels eines teleskopartigen Gestänges 50 an der Decke 9 angeordnet ist. Das Verschieben dieses Gestänges 50 erfolgt je nach Grösse des zu haltenden Werkstückes beispielsweise durch eine Kolben-Zylinder-Einheit.

Die Antriebseinrichtung 4, mit welcher die Spanneinrichtung 3 verbunden ist, weist auf ihrem Umfang eine Führungseinrichtung 51 auf, welche zur relativen Aufnahme eines Haltearmes 54.1 dient. Dieser ist um eine Achse A₃ in dargestellter Doppelpfeilrichtung antreibbar.

An den Haltearm 54.1 schliesst ein sich gegenüber diesem in einer Z-Richtung bewegender Haltearm 54.2 an, an welchem die Sägeeinrichtung 2 gelagert ist. Ein Bewegen der Haltearme 54.1, 54.2 gegeneinander erfolgt beispielsweise durch eine Kolben-Zylinder-Einheit. Die Sägeeinrichtung 2 entspricht der oben beschriebenen Art.

Die Funktionsweise der vorliegenden Erfindung ist folgende:

Das Werkstück 6 wird auf die Rollen 41 und 42 der Aufnahmeeinrichtung 5 gelegt und mit den Spannbacken 28 in die Spanneinrichtung 3 eingespannt. Je nach Umfang des Werkstückes 6 können die Rollen 41, 42 der Aufnahmeeinrichtung 5 mittels der Führungseinrichtung 34 auseinander oder zueinander hin in dargestellter Z-Richtung bewegt werden, so dass die Rollen 41, 42 aussermittig und seitlich an dem Werkstück 6 anliegen. Diese stützen das Werkstück 6 bei der Bearbeitung, da dessen Oberfläche ungleichmässig beschaffen ist.
Anschliessend wird die Spanneinrichtung 3 zusammen mit dem eingespannten Werkstück 6 über die Antriebswelle 29 durch die Antriebseinrichtung 4 in Drehung um eine Achse A₁ versetzt.

Wird das Werkstück 6 angetrieben, drehen sich auch die Rollen 41 und 42 unter dem Werkstück 6 um jeweils eine Achse A₂. Durch die Verbindung dieser Rollen 41, 42 mit dem Element 37 und den Federn 38 können Stösse abgefedert werden, welche durch Unregelmässigkeiten der Oberfläche am Werkstück 6, insbesondere bei geschmiedeten Büchsen auftreten können.

Um das Werkstück 6 an einer gewünschter Stelle durchzusägen, wird die Sägeeinrichtung 2 an dem Maschinenrahmen 1 manuell und/oder automatisch in die gewünschte Position verfahren.

Befindet sich die Sägeeinrichtung 2 in der gewünschten Position wird die Platte 15 durch die Spindel 17, welche durch das Antriebselement 18 angetrieben wird, um das Gelenk 44 so weit in Richtung des Pfeiles Z' bewegt, bis das Sägeblatt 25 in das Werkstück 6 eingreift. Das Sägeblatt 25 wird während dem Zustellen der Platte 15 über das Antriebselement 23 angetrieben und kann das Werkstück 6 durchsägen, wobei während des Sägevorganges des Werkstück 6 angetrieben wird. Der Vorschub der Sägeeinrichtung 2 bzw. des Sägeblattes 25 erfolgt kontinuierlich und steuerbar, während das Werkstück 6 rotativ angetrieben wird.

Besonders hervorzuheben ist hierbei, dass die Antriebsbewegungen des Sägeblattes 25 und des Werkstückes 6 gegenläufig sind, so dass sich ein schnelleres Durchsägen des Werkstückes 6 durchführen lässt.

Auch soll im Rahmen der vorliegenden Erfindung liegen bspw. das Werkstück 6 zwischen drei Rollenelemente 40, 41 ggf. einer oben aufliegenden Einspannrolle einzuspannen, wobei an ggf. auf die Antriebseinrichtung 4 verzichtet werden kann. Diese treibt dann bspw. eine der drei Rollen 41, 42 an. Dies soll ebenfalls im Rahmen der vorliegenden Erfindung liegen.

| **Positionszahlenliste** | | | | | |
|---|---|---|---|---|---|
| 1 | Maschinenrahmen | 34 | Führungseinr. | 67 | |
| 2 | Sägeeinr. | 35 | Querstrebe | 68 | |
| 3 | Spanneinr. | 36 | Querstrebe | 69 | |
| 4 | Antriebseinr. | 37 | Element | 70 | |
| 5 | Aufnahmeeinr. | 38 | Federn | 71 | |
| 6 | Werkstück | 39 | Platte | 72 | |
| 7 | Seitenträger | 40 | Aufnahmeelement | 73 | |
| 8 | Seitenträger | 41 | Rolle | 74 | |
| 9 | Decke | 42 | Rolle | 75 | |
| 10 | Untergrund | 43 | Auflageplatte | 76 | |
| 11 | Traverse | 44 | Gelenk | 77 | |
| 12 | Traverse | 45 | Querverstrebung | 78 | |
| 13 | Kreuzschlitten | 46 | Querverstrebung | 79 | |
| 14 | Grundplatte | 47 | Spannbacken | | |
| 15 | Platte | 48 | Rahmen | | |
| 16 | Führung | 49 | Spanneinr. | | |
| 17 | Spindel | 50 | Gestänge | | |
| 18 | Antriebselement | 51 | Führungseinr. | R₁ | Vorrichtung |
| 19 | Führung | 52 | | R₂ | Vorrichtung |
| 20 | Querstrebe | 53 | | | |
| 21 | Querstrebe | 54 | Haltearm | Y | Richtung |
| 22 | Welle | 55 | Auffangvorr. | Z | Richtung |
| 23 | Antriebselement | 56 | Feststellelem. | X | Richtung |
| 24 | Platte | 57 | | | |
| 25 | Sägeblatt | 58 | | | |
| 26 | Verbindungsstück | 59 | | | |
| 27 | Rahmen | 60 | | A₁ | Achse |
| 28 | Spannbacken | 61 | | A₂ | Achse |
| 29 | Antriebswelle | 62 | | A₃ | Achse |
| 30 | Schlittenelement | 63 | | | |
| 31 | Schlittenelement | 64 | | | |
| 32 | Führungsschiene | 65 | | | |
| 33 | Führungsschiene | 66 | | | |

## Patentansprüche

1. Verfahren zum Trennen von Werkstücken, insbesondere geschmiedeten Büchsen, mit zumindest einer Antriebseinrichtung (4) und einer Spanneinrichtung (3), in welcher das Werkstück (6) gehalten wird, wobei mit zumindest einer Sägeeinrichtung (2) das Werkstück (6) durchtrennt und zum Durchtrennen das Werkstück (6) rotativ gegenüber der Sägeeinrichtung (2) angetrieben wird,
**dadurch gekennzeichnet,**
**dass** das Werkstück (6) mittels zumindest einer Aufnahmeeinrichtung (5) beim Durchtrennen rotativ gelagert und/oder gehalten wird und die zumindest eine Aufnahmeeinrichtung (5) gegenüber einem Untergrund (10) federnd und/oder dämpfend gelagert wird, während die Sägeeinrichtung (2) mit zumindest einer Zustelleinrichtung (17) gegen das Werkstück (6) und gegen die Aufnahmeeinrichtung (5) bewegt wird.

2. Verfahren nach Anspruch 1, **dadurch gekennzeichnet, dass** zum Durchtrennen des Werkstückes (6) zumindest ein Sägeblatt (25) gegenläufig zu der rotativen Bewegung des Werkstückes (6) oder zu der rotativen Bewegung der Sägeeinrichtung (2) angetrieben wird.

3. Verfahren nach Anspruch 1 oder 2, **dadurch gekennzeichnet, dass** die zumindest eine Aufnahmeeinrichtung (5) in eine X-Richtung und/oder Z-Richtung zum Anlegen, Abstützen und Lagern des Werkstückes (6) an dieses verfahren wird.

4. Vorrichtung zum Trennen von Werkstücken, insbesondere geschmiedeten Büchsen, mit zumindest einer Antriebseinrichtung (4) und einer Spanneinrichtung (3) zum Halten eines Werkstückes (6), wobei zumindest eine Sägeeinrichtung (2) zum Durchtrennen des Werkstückes (6) vorgesehen ist und das Werkstück (6) rotativ gegenüber der Sägeeinrichtung (2) antreibbar ist, **dadurch gekennzeichnet, dass** dass das Werkstück (6) beim Durchtrennen auf zumindest einer Aufnahmeeinrichtung (5) rotativ gelagert und/oder eingespannt ist und die zumindest eine Aufnahmeeinrichtung (5) gegenüber einem Untergrund (10) federnd und/oder dämpfend gelagert ist und die Sägeeinrichtung (2) mit zumindest einer Zustelleinrichtung (17) gegen das Werkstück (6) und gegen die Aufnahmeeinrichtung (5) bewegbar ist.

5. Vorrichtung nach Anspruch 4, **dadurch gekennzeichnet, dass** zum Durchtrennen des Werkstückes (6) das zumindest eine Sägeblatt (25) gegenläufig zu der rotativen Bewegung des Werkstückes (6) antreibbar ist.

6. Vorrichtung nach Ansprüche 4 oder 5, **dadurch gekennzeichnet, dass** die zumindest eine Aufnahmeeinrichtung (5) in eine X-Richtung und/oder 2-Richtung zum Anlegen, Abstützen und Lagern des Werkstückes (6) an dieses verfahrbar ist.

7. Vorrichtung nach einem der Ansprüche 4 bis 6, **dadurch gekennzeichnet, dass** der Aufnahmeeinrichtung (4) die Spanneinrichtung (3) zugeordnet ist, welche das Werkstück (6) in etwas parallel zu dem Untergrund (10) aufnimmt.

8. Vorrichtung nach einem der Ansprüche 4 bis 7, **dadurch gekennzeichnet, dass** stirnseitig an der Antriebseinrichtung (4) die Aufnahmeeinrichtung (5) anschliesst, wobei jeder Aufnahmeeinrichtung (5) Schlittenelemente (30, oder 31) zugeordnet sind, welche entlang von Führungsschienen (32, 33) in einer (Z)-Richtung bewegbar sind.

9. Vorrichtung nach Anspruch 8, **dadurch gekennzeichnet, dass** die Schlittenelemente (30, 31) jeweils über Querstreben (35, 36) miteinander verbunden sind.

10. Vorrichtung nach Anspruch 9, **dadurch gekennzeichnet, dass** beidends der Querstreben (35, 36) zumindest ein Element (37) mit ggf. Federn (38) vorgesehen ist, zwischen welchen jeweils die Rollen (41, 42) aktiv angetrieben oder frei drehbar gelagert sind.

11. Vorrichtung nach Anspruch 10, **dadurch gekennzeichnet, dass** die Rollen (41, 42) gegenüber den Querstreben (35, 36) in einer (Y)-Richtung bewegbar sind.

12. Vorrichtung nach Anspruch 10 oder 11, **dadurch gekennzeichnet, dass** die Querstreben (35, 36) bzw. die jeweiligen Rollen (41, 42) entlang den Führungsschienen (32, 33) in (Z-)Richtung bewegbar und festlegbar sind.

## Claims

1. Method of separating workpieces, more especially forged cans, having at least one driving means (4) and one clamping means (3), in which the workpiece (6) is retained, the workpiece (6) being severed with at least one sawing means (2), and the workpiece (6) being driven rotationally relative to the sawing means (2) for severing purposes, **characterised in that** the workpiece (6) is rotationally mounted and/or retained by means of at least one receiving means (5) during the severing process, and the at least one receiving means (5) is mounted in a resilient and/or damping manner relative to a floor (10), while the sawing means (2) is displaced with at least one feeding means (17) towards the workpiece (6) and towards the receiving means (5).

2. Method according to claim 1, **characterised in that**, for severing the workpiece (6), at least one saw blade (25) is driven in the opposite direction to the rotational displacement of the workpiece (6) or in the opposite direction to the rotational displacement of the sawing means (2).

3. Method according to claim 1 or 2, **characterised in that**, for the fitting, supporting and storing of the workpiece (6), the at least one receiving means (5) is transported to said workpiece in an X direction and/or Y direction.

4. Apparatus for severing workpieces, more especially forged cans, having at least one driving means (4) and one clamping means (3) for retaining a workpiece (6), at least one sawing means (2) being provided for severing the workpiece (6), and the workpiece (6) being rotationally drivable relative to the sawing means (2), **characterised in that** the workpiece (6) is rotationally mounted and/or clamped in position on at least one receiving means (5) during the severing process, and the at least one receiving means (5) is mounted in a resilient and/or damping manner relative to a floor (10), and the sawing means (2) is displaceable with at least one feeding means (17) towards the workpiece (6) and towards the receiving means (5).

5. Apparatus according to claim 4, **characterised in that**, for severing the workpiece (6), the at least one saw blade (25) is drivable in the opposite direction to the rotational displacement of the workpiece (6).

6. Apparatus according to claim 4 or 5, **characterised in that**, for the fitting, supporting and storing of the workpiece (6), the at least one receiving means (5) is transportable to said workpiece in an X direction and/or Y direction.

7. Apparatus according to one of claims 4 to 6, **characterised in that** the clamping means (3) is associated with the receiving means (5) and accommodates the workpiece (6) in a substantially parallel manner relative to the floor (10).

8. Apparatus according to one of claims 4 to 7, **characterised in that** the receiving means (5) communicates at its end face with the driving means (4), slide elements (30 or 31), which are displaceable along guide rails (32, 33) in a (Z) direction, being associated with each receiving means (5).

9. Apparatus according to claim 8, **characterised in that** the slide elements (30, 31) are each interconnected via transverse struts (35, 36).

10. Apparatus according to claim 9, **characterised in that**, at each end of the transverse struts (35, 36), at least one element (37) is provided, possibly with springs (38), between which the rollers (41, 42) are respectively actively driven or mounted in a freely rotatable manner.

11. Apparatus according to claim 10, **characterised in that** the rollers (41, 42) are displaceable relative to the transverse struts (35, 36) in a (Y) direction.

12. Apparatus according to claim 10 or 11, **characterised in that** the transverse struts (35, 36) or respectively the respective rollers (41, 42) are displaceable along the guide rails (32, 33) in the (Z) direction and securable.

## Revendications

1. Procédé pour sectionner des pièces à usiner, en particulier des manchons estampés, avec au moins un dispositif d'entraînement (4) et un dispositif de serrage (3) dans lequel est maintenue la pièce à usiner (6), la pièce à usiner (6) étant sectionnée par au moins un dispositif de sciage (2) et, pour le sectionnement, la pièce à usiner (6) étant entraînée de manière rotative par rapport au dispositif de sciage (2),
**caractérisé par le fait**
**que** la pièce à usiner (6) est, lors du sectionnement, montée et/ou maintenue de manière rotative au moyen d'au moins un dispositif de réception (5) et que l'au moins un dispositif de réception (5) est monté de manière élastique et/ou amortissante par rapport à une base (10), tandis que le dispositif de sciage (2) est déplacé, avec au moins un dispositif d'amenée (17), par rapport à la pièce à usiner (6) et au dispositif de réception (5).

2. Procédé selon la revendication 1, **caractérisé par le fait que**, pour le sectionnement de la pièce à usiner (6), au moins une lame de scie (25) est entraînée dans le sens opposé au mouvement de rotation de la pièce à usiner (6) ou du mouvement de rotation du dispositif de sciage (2).

3. Procédé selon la revendication 1 ou 2, **caractérisé par le fait que** l'au moins un dispositif de réception (5) est déplacé dans une direction X et/ou une direction Z, pour appliquer, appuyer et monter la pièce à usiner (6) sur ce dernier.

4. Dispositif pour sectionner des pièces à usiner, en particulier des manchons estampés, avec au moins un dispositif d'entraînement (4) et un dispositif de serrage (3) pour maintenir la pièce à usiner (6), au moins un dispositif de sciage (2) destiné à sectionner la pièce à usiner (6) étant prévu et la pièce à usiner (6) pouvant être entraînée de manière rotative par rapport au dispositif de sciage (2), **caractérisé par le fait que** la pièce à usiner (6) est, lors du sectionnement, montée et/ou serrée de manière rotative sur au moins un dispositif de réception (5) et que l'au moins un dispositif de réception (5) est monté de manière élastique et/ou amortissante par rapport à une base (10) et que le dispositif de sciage (2) peut être déplacé, avec au moins un dispositif d'amenée (17), par rapport à la pièce à usiner (6) et au dispositif de réception (5).

5. Dispositif selon la revendication 4, **caractérisé par le fait que**, pour le sectionnement de la pièce à usiner (6), l'au moins une lame de scie (25) peut être entraînée dans le sens opposé au mouvement de rotation de la pièce à usiner (6).

6. Dispositif selon les revendications 4 ou 5, **caractérisé par le fait que** l'au moins un dispositif de réception (5) peut être déplacé dans une direction X et/ou une direction Z, pour appliquer, appuyer et monter la pièce à usiner (6) sur ce dernier.

7. Dispositif selon l'une des revendications 4 à 6, **caractérisé par le fait qu'**au dispositif de réception (5) est associé le dispositif de serrage (3) qui reçoit la pièce à usiner (6) environnement parallèlement à la base (10).

8. Dispositif selon l'une des revendications 4 à 7, **caractérisé par le fait que** du côté frontal se raccorde, au dispositif d'entraînement (4), le dispositif de réception (5), à chaque dispositif de réception (5) étant associés des éléments de coulisseau (30 ou 31) pouvant être déplacés le long de rails de guidage (32, 33) dans une direction (Z).

9. Dispositif selon la revendication 8, **caractérisé par le fait que** les éléments de coulisseau (30, 31) sont, chacun, reliés l'un à l'autre par l'intermédiaire d'entretoises transversales (35, 36).

10. Dispositif selon la revendication 9, **caractérisé par le fait qu'**aux deux extrémités des entretoises transversales (35, 36) est prévu au moins un élément (37) avec éventuellement des ressorts (38) entre lesquels les rouleaux (41, 42) sont, chacun, entraînés activement ou montés en libre rotation.

11. Dispositif selon la revendication 10, **caractérisé par le fait que** les rouleaux (41, 42) peuvent se déplacer par rapport aux entretoises transversales (35, 36) dans une direction (Y).

12. Dispositif selon la revendication 10 ou 11, **caractérisé par le fait que** les entretoises transversales (35, 36) ou les rouleaux (41, 42) respectifs peuvent être déplacés et fixés le long des rails de guidage (32, 33) dans la direction (Z).
